# DEMANDE DE BREVET EUROPEEN

(11) **EP 3 965 010 A1**
(43) Date de publication de la demande: **09.03.2022**
(21) Numéro de dépôt: 21193702.4
(22) Date de dépôt: 30.08.2021
(51) Int. Cl.: G06K 19/07

(54) **PERSONNALISATION D'UNE CARTE À MICROCIRCUIT**

(30) Priorité: 04.09.2020 FR 2008984
(71) Demandeur: STMicroelectronics (Rousset) SAS, 13790 Rousset (FR)
(72) Inventeur: ALARY, Philippe, 13114 PUYLOUBIER (FR)
(74) Mandataire: Cabinet Beaumont

(57) **Abrégé**

La présente description concerne un procédé, dans lequel des étapes de personnalisation d'une carte à microcircuit (101) pourvue d'un capteur (105) d'empreintes digitales, mises en œuvre par la carte, sont contrôlées par un dispositif (300) de communication en champ proche.

## Description

### Domaine technique

La présente description concerne de façon générale les dispositifs électroniques. La présente description concerne plus particulièrement les cartes à microcircuit pourvues d'un capteur biométrique, appelées plus simplement cartes biométriques, et leurs procédés de personnalisation.

### Technique antérieure

Pour qu'un utilisateur puisse faire usage d'une carte biométrique, il est généralement nécessaire que des données biométriques propres à cet utilisateur aient préalablement été stockées dans la carte. Ce stockage des données biométriques de l'utilisateur dans la carte s'effectue lors d'opérations dites de personnalisation, d'inscription ou d'enregistrement (« enrolment », en anglais) de la carte. La mise en œuvre de ces opérations de personnalisation s'avère actuellement contraignante pour l'utilisateur.

### Résumé de l'invention

Il existe un besoin d'améliorer les procédés de personnalisation de cartes biométriques actuels.

Un mode de réalisation pallie tout ou partie des inconvénients des procédés de personnalisation de cartes biométriques connus.

Un mode de réalisation prévoit un procédé, dans lequel des étapes de personnalisation d'une carte à microcircuit pourvue d'un capteur d'empreintes digitales, mises en œuvre par la carte, sont contrôlées par un dispositif de communication en champ proche.

Selon un mode de réalisation, le procédé comprend les étapes suivantes :
a) acquérir, par le capteur d'empreintes digitales, des données biométriques caractéristiques d'un utilisateur ; et
b) stocker les données biométriques dans une mémoire de la carte à microcircuit.

Selon un mode de réalisation, le dispositif de communication en champ proche alimente la carte à microcircuit.

Selon un mode de réalisation, le dispositif est un téléphone mobile.

Selon un mode de réalisation, la carte à microcircuit est une carte bancaire biométrique de paiement sans contact.

Selon un mode de réalisation, la carte à microcircuit est maintenue solidaire du dispositif par un système de positionnement.

Un mode de réalisation prévoit un système de positionnement, adapté à mettre en œuvre le procédé tel que décrit.

Selon un mode de réalisation, le système comprend une coque de protection du dispositif comportant une fente d'insertion de la carte à microcircuit.

Selon un mode de réalisation, le système comprend un gabarit d'alignement de la carte à microcircuit par rapport au dispositif.

Un mode de réalisation prévoit un produit programme d'ordinateur, comportant un support de stockage non transitoire adapté à mettre en œuvre le procédé tel que décrit.

Un mode de réalisation prévoit un système comprenant une carte à microcircuit et un téléphone mobile, adapté à mettre en œuvre le procédé tel que décrit.

### Brève description des dessins

Ces caractéristiques et avantages, ainsi que d'autres, seront exposés en détail dans la description suivante de modes de réalisation et modes de mise en œuvre particuliers faite à titre non limitatif en relation avec les figures jointes parmi lesquelles :
la figure 1 représente, de façon schématique, un exemple de système de communication en champ proche du type auquel s'appliquent les modes de réalisation et modes de mise en œuvre décrits ;
la figure 2 est une vue de dessus, schématique et partielle, d'un exemple de système de personnalisation d'une carte biométrique ;
la figure 3 est une vue de dessus, schématique et partielle, d'un système de personnalisation d'une carte biométrique selon un mode de réalisation ;
la figure 4 est une vue de dessous, schématique et partielle, du système de personnalisation de la figure 3 ;
la figure 5 est une vue en perspective d'un dispositif équipé d'une coque de protection ; et
la figure 6 est un organigramme illustrant des étapes d'un procédé de personnalisation d'une carte biométrique selon un mode de mise en œuvre.

### Description des modes de réalisation

De mêmes éléments ont été désignés par de mêmes références dans les différentes figures. En particulier, les éléments structurels et/ou fonctionnels communs aux différents modes de réalisation et modes de mise en œuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en œuvre décrits ont été représentés et sont détaillés. En particulier, la génération des signaux et données échangés en champ proche ainsi que leur interprétation n'ont pas été détaillées, les modes de réalisation et modes de mise en œuvre décrits étant compatibles avec les techniques usuelles de génération et d'interprétation de ces signaux et données.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence, sauf précision contraire, à l'orientation des figures.

Sauf précision contraire, les expressions "environ", "approximativement", "sensiblement", et "de l'ordre de" signifient à 10 % près, de préférence à 5 % près.

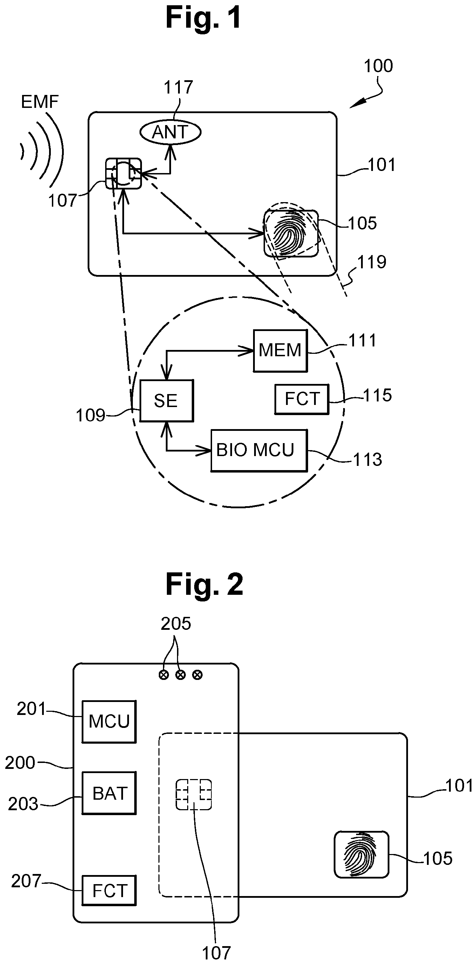

La figure 1 représente, de façon schématique, un exemple de système 100 de communication en champ proche, ou système NFC (de l'anglais « Near-Field Communication »), du type auquel s'appliquent les modes de réalisation et modes de mise en œuvre décrits.

Dans l'exemple représenté, le système NFC 100 comporte une carte 101 à microcircuit. Un champ électromagnétique EMF est par exemple émis par un dispositif (non représenté) et capté par la carte 101 située à portée. Cela permet notamment à la carte 101 d'être alimentée en énergie électrique par ce dispositif, et d'échanger des données avec ce dispositif.

À titre d'exemple, la carte 101 est une carte bancaire, par exemple une carte de paiement sans contact, une carte de transport, une carte d'identification ou d'accès personnelle, etc.

Dans l'exemple représenté, la carte 101 est pourvue d'un capteur biométrique 105. Le capteur biométrique 105 est par exemple un capteur ou lecteur d'empreintes digitales. Le capteur biométrique 105 est par exemple situé en face avant de la carte 101, comme illustré en figure 1.

Dans l'exemple représenté, la carte biométrique 101 comporte en outre une puce 107. La puce 107 est symbolisée, en figure 1, par des contacts situés en face avant de la carte 101, par exemple affleurant la face avant de la carte 101. Ces contacts sont par exemple destinés à véhiculer des signaux d'alimentation et de données lors d'une communication avec contact entre la carte 101 et un lecteur (non représenté).

Dans l'exemple représenté, la puce 107 comporte une unité de traitement 109 (SE). L'unité de traitement 109 est par exemple utilisée pour traiter des données dites sécurisées ou secrètes, c'est-à-dire des données dont on souhaite réserver l'accès à certains utilisateurs ou circuits. L'unité de traitement 109 peut plus précisément avoir pour fonction notamment de protéger des données secrètes, par exemple des données caractéristiques d'un utilisateur ou propriétaire de la carte 101, et d'effectuer des opérations sur ou à l'aide de ces données secrètes. L'unité de traitement 109 est par exemple configurée de sorte que les données secrètes qu'elle manipule ne puissent pas être découvertes par un attaquant ou pirate. À titre d'exemple, l'unité de traitement 109 est un microcontrôleur, par exemple un microcontrôleur sécurisé.

Dans l'exemple représenté, la puce 107 comporte en outre une mémoire 111 (MEM). À titre d'exemple, la mémoire 111 peut comprendre des zones destinées à stocker des instructions de code de programme et/ou des variables pour l'exécution d'opérations par l'unité de traitement 109. La mémoire 111 de la puce 107 peut en outre comprendre des zones dites sécurisées. À titre d'exemple, ces zones sécurisées peuvent être utilisées pour stocker les données secrètes de l'utilisateur de la carte 101. Plus précisément, les zones sécurisées de la mémoire 111 peuvent contenir une ou plusieurs empreintes digitales dites de référence du propriétaire de la carte 101, auxquelles des données issues de traitements d'images acquises par le capteur biométrique 105 sont comparées par exemple lors d'une procédure d'authentification.

Dans l'exemple représenté, la puce 107 comporte en outre un microcontrôleur 113 (BIO MCU). Le microcontrôleur 113 est par exemple utilisé pour traiter des données acquises par le capteur d'empreintes digitales 105 de la carte biométrique 101. Le microcontrôleur 113 est par exemple capable d'exécuter un nombre d'instructions par seconde plus important que l'unité de traitement 109, pour une consommation énergétique sensiblement équivalente. À titre d'exemple, le microcontrôleur 113 est un microcontrôleur biométrique, par exemple un microcontrôleur dédié à exécuter des instructions de traitement d'images provenant du capteur d'empreintes digitales 105.

Le microcontrôleur 113 et le microcontrôleur sécurisé 109 peuvent être formés dans et sur un même substrat, par exemple un morceau de plaquette en un matériau semiconducteur. À titre de variante, les microcontrôleurs 109 et 113 sont formés sur des substrats distincts.

La puce 107 de la carte biométrique 101 peut également comporter un ou plusieurs autres éléments. Ces éléments sont symbolisés, en figure 1, par un bloc fonctionnel 115 (FCT).

Dans l'exemple représenté, la carte 101 comporte en outre une antenne 117 (ANT). L'antenne 117 est par exemple adaptée à capter le champ électromagnétique EMF lorsque la carte 101 se trouve à portée.

À titre d'exemple, l'unité de traitement 109 peut comporter des modules ou macrocellules de gestion de l'énergie électrique captée par l'antenne 117 sur le champ électromagnétique EMF. Ces modules sont par exemple utilisés pour gérer l'alimentation électrique du capteur d'empreintes 105 et du microcontrôleur 113 en fonction de l'énergie disponible à partir du champ EMF.

Au cours d'une communication ou transaction mettant en œuvre la carte 101, une étape de vérification d'identité de l'utilisateur de la carte 101 peut être mise en œuvre. Dans ce cas, l'utilisateur est par exemple invité à poser un doigt 119 sur le capteur d'empreintes digitales 105. Une ou plusieurs images du doigt 119 de l'utilisateur sont par exemple acquises par le capteur d'empreintes digitales 105. La ou les images acquises par le capteur d'empreintes digitales 105 sont alors par exemple traitées par le microcontrôleur 113 pour en extraire des caractéristiques biométriques, par exemple des points singuliers ou minuties. Ces minuties sont ensuite par exemple comparées à des minuties dites de référence, préalablement stockées par exemple dans la mémoire 111 de la carte 101, pour contrôler l'identité de l'utilisateur de la carte 101.

Le stockage des minuties de référence de l'utilisateur dans la carte 101 s'effectue au cours d'opérations dites de personnalisation, d'inscription ou d'enregistrement (« enrolment », en anglais) de la carte 101. Pour effectuer ces opérations, l'utilisateur est généralement contraint de se rendre dans un guichet spécialisé, par exemple un guichet de banque dans le cas où la carte 101 est une carte bancaire. La banque peut alternativement prévoir de faire parvenir un dispositif de personnalisation de la carte 101, par exemple le dispositif exposé ci-dessous en relation avec la figure 2, au domicile de l'utilisateur.

La figure 2 est une vue de dessus, schématique et partielle, d'un exemple de système de personnalisation d'une carte, par exemple la carte biométrique 101 précédemment exposée en relation avec la figure 1.

Dans l'exemple représenté, la carte 101 est insérée dans un dispositif électronique 200. Le dispositif 200 correspond, dans cet exemple, à un dispositif usuel de personnalisation de cartes biométriques. Plus précisément, le dispositif 200 permet par exemple de stocker, dans la carte 101, des minuties de référence de l'utilisateur de la carte 101.

Dans l'exemple représenté, le dispositif 200 comporte une fente ou encoche latérale destinée à recevoir la carte 101. Le dispositif 200 est par exemple adapté à communiquer avec contact avec la carte 101. À titre d'exemple, le dispositif 200 peut comporter des contacts (non représentés) positionnés en vis-à-vis des contacts de la puce 107 de la carte 101 lorsque celle-ci est insérée dans le dispositif 200.

Dans l'exemple représenté, le dispositif 200 comporte un microcontrôleur 201 (MCU). Le microcontrôleur 201 est par exemple une unité de traitement principale du dispositif 200. À titre d'exemple, le microcontrôleur 201 permet de commander des opérations d'acquisition d'images par le capteur d'empreintes digitales 105 de la carte 101, de traitement de ces images pour en extraire les minuties de référence, et de stockage des minuties de référence dans la carte 101.

Dans l'exemple représenté, le dispositif 200 comporte en outre une source d'énergie embarquée, par exemple une batterie 203 (BAT). Dans un cas où le dispositif 200 est destiné à être utilisé dans différents pays, cela permet par exemple au fabriquant du dispositif 200 de s'affranchir de contraintes propres à des réseaux de distribution d'énergie de ces différents pays. Le dispositif 200 peut alternativement être équipé d'une alimentation secteur.

Dans l'exemple représenté, le dispositif 200 comporte en outre des indicateurs lumineux, par exemple des diodes électroluminescentes 205, ou LED (de l'anglais « Light-Emitting Diode »). Les diodes 205 sont par exemple situées en face avant du dispositif 200. Les diodes 205 peuvent être toutes de la même couleur, ou de couleurs différentes les unes des autres. À titre d'exemple, les diodes 205 permettent de guider l'utilisateur lors de l'exécution des opérations de personnalisation de la carte 101.

Le dispositif 200 peut également comporter un ou plusieurs autres éléments. Ces éléments sont symbolisés, en figure 2, par un bloc fonctionnel 207 (FCT).

Un inconvénient du dispositif 200 tient au fait que son utilisation est généralement jugée peu conviviale par l'utilisateur de la carte 101. Cela provient notamment du fait que les diodes 205 procurent des possibilités fortement limitées d'affichage d'informations et d'indications. En outre, la fourniture et l'expédition du dispositif 200 s'effectuent généralement aux frais de l'utilisateur de la carte 101. Ces inconvénients d'ordre pratique et économique tendent à freiner l'adoption de cartes biométriques telles que la carte 101.

Un autre inconvénient du dispositif 200 tient au fait que son utilisation n'intervient généralement qu'une seule fois, typiquement pendant quelques minutes seulement, dans la vie de la carte 101. Par ailleurs, dans un cas où l'utilisateur souhaite remplacer la carte 101, par exemple par une autre carte plus récente, le dispositif 200 risque de ne plus fonctionner avec cette autre carte. Outre l'impact économique précédemment évoqué, la fabrication et l'utilisation du dispositif de personnalisation 200 présentent donc également un impact écologique, dont il serait souhaitable de s'affranchir.

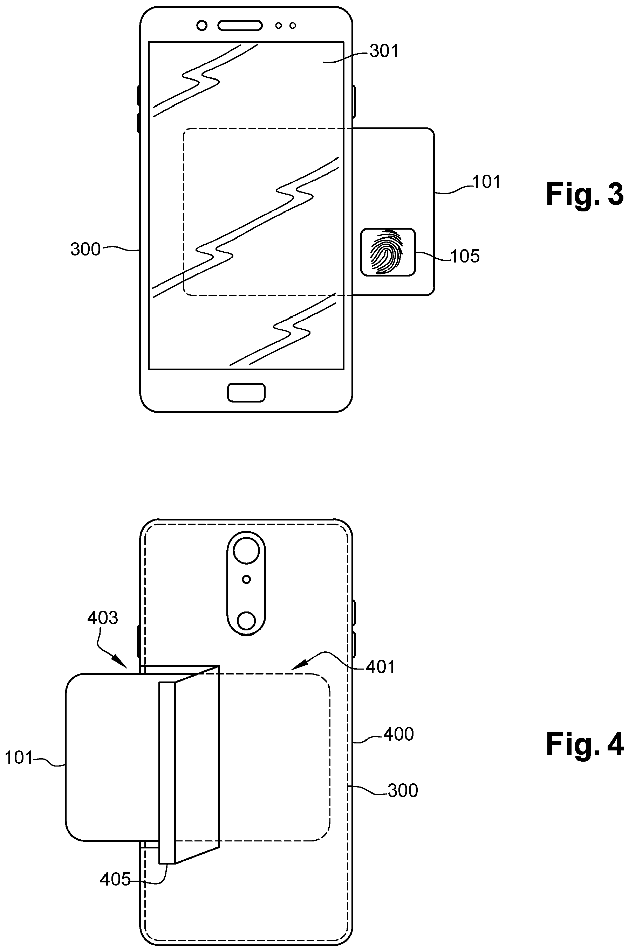

La figure 3 est une vue de dessus, schématique et partielle, d'un système de personnalisation d'une carte biométrique, par exemple la carte 101, selon un mode de réalisation.

Dans l'exemple représenté, la carte biométrique 101 est placée au dos d'un téléphone mobile 300, par exemple contre une face arrière du téléphone mobile 300. La carte 101 est par exemple positionnée de sorte que le téléphone mobile 300 ne recouvre pas totalement la face avant de la carte 101. Plus précisément, la carte 101 est positionnée de sorte que le capteur d'empreintes digitales 105 soit accessible par l'utilisateur.

De manière générale, le téléphone mobile 300 est adapté à communiquer en champ proche avec la carte 101, comme cela a été décrit précédemment en relation avec la figure 1. À titre d'exemple, le téléphone mobile 300 comporte une antenne de communication en champ proche (non représentée), par exemple une antenne analogue à l'antenne 117 précédemment décrite en relation avec la figure 1. La carte 101 est alors positionnée de manière que l'antenne 117 de la carte 101 soit sensiblement alignée par rapport à l'antenne du téléphone mobile 300. Cela permet par exemple un couplage optimal entre la carte 101 et le téléphone mobile 300.

Dans l'exemple représenté, le téléphone mobile 300 comprend un produit programme d'ordinateur, comportant un support de stockage non transitoire adapté à mettre en œuvre un procédé de personnalisation de la carte 101.

Le téléphone mobile 300 est par exemple utilisé comme interface de personnalisation, en champ proche, de la carte biométrique 101. Plus précisément, des instructions et des informations liées au déroulement des opérations de personnalisation de la carte biométrique 101 sont par exemple affichées, à destination de l'utilisateur, sur un écran 301 du téléphone mobile 300. À titre d'exemple, des dessins, des schémas des animations et/ou des barres de progression peuvent notamment être affichés par l'écran 301 du téléphone 300 afin de guider l'utilisateur dans l'exécution des opérations de personnalisation de la carte 101 et de le renseigner quant à la réussite ou l'échec de ces opérations.

Un avantage du mode de réalisation décrit en relation avec la figure 3 tient au fait que l'utilisation du téléphone mobile 300 permet de faciliter grandement l'exécution des opérations de personnalisation de la carte biométrique 101, notamment en améliorant la convivialité de l'interface par rapport au dispositif 200 de la figure 2. En outre, du fait que de nombreuses personnes possèdent déjà un téléphone mobile capable de communiquer en champ proche tel que le téléphone mobile 300, les opérations de personnalisation de la carte biométrique 101 peuvent être exécutées sans que l'utilisateur n'ait besoin de se rendre dans un guichet ou de se procurer le dispositif 200.

Un autre avantage de ce mode de réalisation tient au fait que les instructions de code de programme du produit programme d'ordinateur du téléphone mobile 300 peuvent être mises à jour en cas de remplacement de la carte biométrique 101 par une autre carte plus récente, présentant par exemple des composants ou une architecture différente.

Cela permet ainsi de réduire les frais et l'impact écologique liés aux opérations de personnalisation de la carte 101.

La figure 4 est une vue de dessous, schématique et partielle, du système de personnalisation de la figure 3.

Dans l'exemple représenté, le téléphone mobile 300 est placé dans un étui ou coque 400. La coque 400 est par exemple une coque de protection permettant notamment de protéger le téléphone mobile 300 contre d'éventuelles dégradations pouvant être causées, par exemple, par un choc ou une chute.

Dans l'exemple représenté, la coque 400 comporte un logement 401. Le logement 401 permet par exemple de maintenir mécaniquement la carte 101 solidaire du téléphone mobile 300, par exemple lors des opérations de personnalisation de la carte 101. Cela permet notamment d'éviter des manipulations complexes, par exemple dans lesquelles l'utilisateur serait contraint de maintenir à la fois le téléphone mobile 300 et la carte 101 tout en positionnant son doigt sur le capteur d'empreintes digitales 105 et en effectuant potentiellement des manipulations sur l'écran pour mener à bien la procédure. Cela permet en outre d'éviter un risque d'éloignement de la carte 101 par rapport au téléphone mobile 300 pendant les opérations de personnalisation, ce qui serait susceptible de provoquer un échec de la communication.

Le logement 401 est par exemple formé dans l'épaisseur de la coque 400. Le logement 401 est par exemple accessible depuis une fente 403 située sur un côté de la coque 400. Comme illustré en figure 4, la fente 403 permet par exemple l'insertion, perpendiculairement à l'axe longitudinal du téléphone mobile 300, de la carte 101 dans le logement 401 de la coque 400. Comme illustré en figure 4, le logement 401 présente par exemple une longueur, ou profondeur, inférieure à la longueur de la carte 101. Cela permet notamment de faire en sorte que le capteur d'empreintes digitales 105 de la carte 101 demeure accessible par l'utilisateur lorsque la carte 101 est en butée au fond du logement 401.

Le logement 401 est par exemple réalisé de sorte à garantir un couplage optimal entre le téléphone mobile 300 et la carte 101 lors des opérations de personnalisation de la carte 101. Plus précisément, le logement 401 est par exemple réalisé de sorte que, lorsque la carte 101 est en butée au fond du logement 401, l'antenne 117 de la carte 101 soit alignée par rapport à l'antenne de communication en champ proche (non représentée) du téléphone mobile 300. On minimise ainsi le risque d'erreurs de communication lors des opérations de personnalisation de la carte 101.

Dans l'exemple représenté, la coque 400 comporte en outre un rabat 405. Le rabat 405 permet par exemple d'obturer le logement 401, notamment la fente 403 d'insertion de la carte 101, lorsque la carte 101 n'est pas présente. La fermeture du rabat 405 permet notamment d'éviter que de l'eau ou des corps étrangers, tels que des poussières, ne pénètrent à l'intérieur du logement 401. La fermeture du rabat 405 peut en outre contribuer à la rigidité mécanique de l'ensemble de la coque 400.

Bien que l'on ait décrit en relation avec la figure 4 un mode de réalisation dans lequel la carte 101 est maintenue solidaire du téléphone 300 par la coque 400, ce mode de réalisation est adaptable par la personne du métier à d'autres types de systèmes de positionnement. En particulier, la personne du métier est capable d'adapter ce qui est décrit en relation avec la figure 4 à un cas où la carte 101 est positionnée par rapport au téléphone 300 en utilisant un gabarit d'alignement. Le gabarit d'alignement peut être adapté à chaque modèle de téléphone 300, ou être conçu pour convenir à plusieurs types de téléphones. À titre d'exemple, le gabarit d'alignement peut être réalisé en carton, en matière plastique, etc. Par exemple, un gabarit en carton pourrait être envoyé par courrier dans une enveloppe standard à moindre frais et recyclé après son usage.

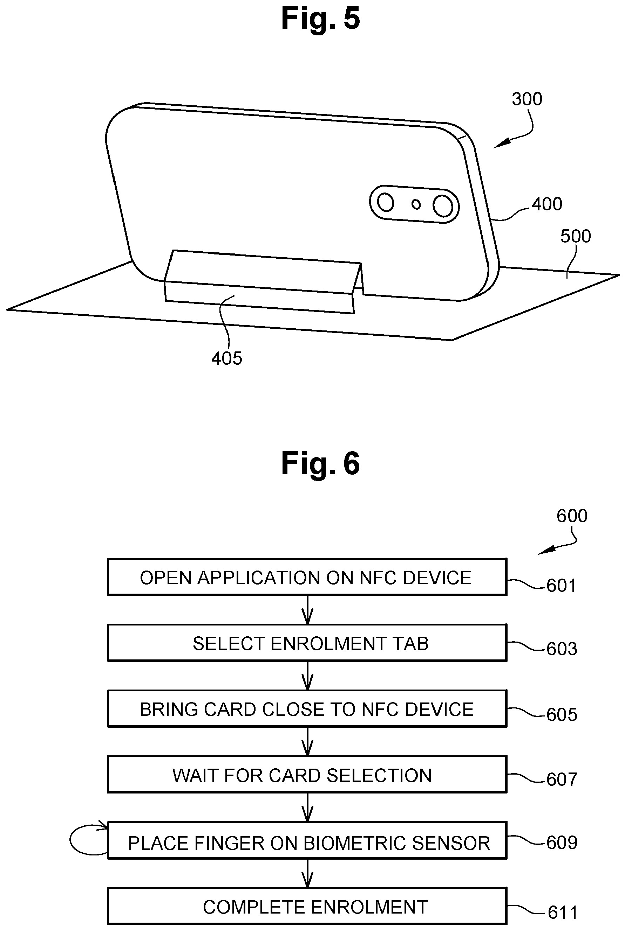

La figure 5 est une vue en perspective d'un dispositif équipé d'une coque de protection, par exemple le téléphone mobile 300 pourvu de la coque 400.

Dans l'exemple représenté, la coque 400 est utilisée pour maintenir le téléphone 300 dans une position inclinée par rapport à un support 500. Plus précisément, le rabat 405 de la coque 400 permet de fournir un appui stable sur le support 500 lorsque le téléphone 300 est posé sur la tranche. Cela facilite l'utilisation du téléphone 300, par exemple dans le cas d'un visionnage de contenu vidéo sur l'écran 301 du téléphone mobile 300.

La figure 6 est un organigramme 600 illustrant des étapes successives d'un procédé de personnalisation d'une carte biométrique, par exemple la carte biométrique 101, selon un mode de mise en œuvre.

Au cours d'une étape 601 (OPEN APPLICATION ON NFC DEVICE), l'utilisateur lance une application sur le téléphone mobile 300. Dans le cas où la carte 101 à personnaliser est une carte bancaire, l'application est par exemple une application dite de banque en ligne, c'est-à-dire une application à partir de laquelle des clients de la banque peuvent notamment consulter le solde de leur compte, effectuer des virements bancaires, etc., à laquelle ont été intégrées des fonctionnalités de personnalisation de cartes biométriques. En variante, l'application est une application réservée à la personnalisation de cartes biométriques.

Au cours d'une autre étape 603 (SELECT ENROLMENT TAB), l'utilisateur sélectionne par exemple un onglet de l'application donnant accès aux fonctionnalités de personnalisation de cartes biométriques, dans le cas par exemple où l'application comporte des fonctionnalités autres que celles de personnalisation de cartes. Cela permet par exemple de débuter les opérations de personnalisation de la carte 101.

Avant le début des opérations de personnalisation de la carte 101, par exemple à l'étape 601 ou à l'étape 603, une opération d'authentification peut être prévue pour vérifier l'identité de l'utilisateur souhaitant personnaliser la carte 101. À titre d'exemple, en fonction du niveau de sécurité souhaité, l'authentification peut être effectuée par un ou plusieurs facteurs, par exemple choisis parmi un code secret (de préférence envoyé par voie séparée), un contrôle d'empreinte digitale par un capteur (non représenté) du téléphone mobile 300 et une reconnaissance faciale par un capteur d'images (non représenté) du téléphone mobile 300.

Au cours d'encore une autre étape 605 (BRING CARD CLOSE TO NFC DEVICE), l'utilisateur est invité à rapprocher la carte 101 à personnaliser du téléphone mobile 300. L'utilisateur peut alors par exemple placer la carte 101 à proximité du téléphone 300, comme exposé précédemment en relation avec la figure 3, ou insérer la carte 101 dans le logement 403 si le téléphone mobile 300 est pourvu de la coque 400. À titre d'exemple, l'écran 301 du téléphone mobile 300 peut afficher un schéma ou une animation permettant d'assister l'utilisateur dans l'exécution de cette opération.

Au cours d'encore une autre étape 607 (WAIT FOR CARD SELECTION), l'utilisateur est invité à attendre que la carte 101 soit sélectionnée par le téléphone mobile 300. Pendant cette étape, le téléphone mobile 300 émet par exemple un champ électromagnétique pour tenter de détecter la carte 101. Une fois la carte 101 détectée, une communication en champ proche s'établit entre la carte 101 et le téléphone 300, et un canal de communication sécurisé est par exemple ouvert.

Au cours d'encore une autre étape 609 (PLACE FINGER ON BIOMETRIC SENSOR), l'utilisateur est invité à placer un doigt sur le capteur d'empreintes digitales 105 de la carte biométrique 101. Au moins une image de l'empreinte digitale du doigt de l'utilisateur est alors capturée par le capteur 105, puis traitée pour en extraire les minuties de référence. Ces minuties de référence sont ensuite stockées dans la carte 101, par exemple dans la mémoire 111 de la puce 107. Ces opérations peuvent par exemple être renouvelées pour un ou plusieurs autres doigts du même utilisateur et/ou pour un ou plusieurs autres doigts d'un autre utilisateur à qui l'on souhaite également permettre d'utiliser la carte 101.

Au cours d'encore une autre étape 611 (COMPLETE ENROLMENT), les opérations de personnalisation de la carte 101 sont achevées. Le canal sécurisé ouvert lors de l'étape 607 est alors par exemple fermé. Des opérations matérielles et/ou logicielles peuvent être prévues afin de garantir une irréversibilité du procédé de personnalisation. Cela permet notamment d'éviter qu'une personne malintentionnée ne puisse remplacer les minuties de référence stockées dans la carte 101 à l'issue de l'exécution du procédé de personnalisation de la carte 101.

Divers modes de réalisation, modes de mise en œuvre et variantes ont été décrits. La personne du métier comprendra que certaines caractéristiques de ces divers modes de réalisation, modes de mise en œuvre et variantes pourraient être combinées, et d'autres variantes apparaîtront à la personne du métier. En particulier, les modes de réalisation et modes de mise en œuvre décrits ne se limitent pas à l'architecture de la carte 101 telle qu'exposée ci-dessus en relation avec la figure 1, mais s'appliquent plus généralement à toute carte à microcircuit capable de mettre en œuvre des fonctions de communication en champ proche et pourvue d'un capteur biométrique.

En outre, bien que l'on ait décrit ci-dessus des modes de réalisation et modes de mise en œuvre prenant pour exemple la personnalisation de la carte biométrique 101 à partir du téléphone mobile 300, la personne du métier est capable de transposer ces modes de réalisation et modes de mise en œuvre à l'utilisation d'autres dispositifs NFC tels que des tablettes tactiles, des ordinateurs portables, etc.

Enfin, la mise en œuvre pratique des modes de réalisation, modes de mise en œuvre et variantes décrits est à la portée de la personne du métier à partir des indications fonctionnelles données ci-dessus. En particulier, la mise en œuvre pratique du mode de mise en œuvre du procédé de personnalisation exposé en relation avec la figure 6, et plus particulièrement des opérations d'authentification, est à la portée de la personne du métier. En outre, la réalisation de l'application permettant de personnaliser des cartes biométriques à partir d'un dispositif NFC est à la portée de la personne du métier.

## Revendications

1. Procédé, dans lequel des étapes de personnalisation d'une carte à microcircuit (101) pourvue d'un capteur (105) d'empreintes digitales, mises en œuvre par la carte, sont contrôlées par un dispositif (300) de communication en champ proche.

2. Procédé selon la revendication 1, comprenant les étapes suivantes :
a) acquérir, par le capteur (105) d'empreintes digitales, des données biométriques caractéristiques d'un utilisateur ; et
b) stocker les données biométriques dans une mémoire (111) de la carte à microcircuit (101).

3. Procédé selon la revendication 1 ou 2, dans lequel le dispositif (300) de communication en champ proche alimente la carte à microcircuit (101).

4. Procédé selon l'une quelconque des revendications 1 à 3, dans lequel le dispositif (300) est un téléphone mobile.

5. Procédé selon l'une quelconque des revendications 1 à 4, dans lequel la carte à microcircuit (101) est une carte bancaire biométrique de paiement sans contact.

6. Procédé selon l'une quelconque des revendications 1 à 5, dans lequel la carte à microcircuit (101) est maintenue solidaire du dispositif (300) par un système de positionnement (400).

7. Système de positionnement (400), adapté à mettre en œuvre le procédé selon la revendication 6.

8. Système selon la revendication 7, comprenant une coque de protection du dispositif (300) comportant une fente (403) d'insertion de la carte à microcircuit (101).

9. Système selon la revendication 7, comprenant un gabarit d'alignement de la carte à microcircuit (101) par rapport au dispositif (300).

10. Produit programme d'ordinateur comprenant des instructions qui, lorsqu'elles sont exécutées par un ordinateur, conduisent à mettre en œuvre le procédé selon l'une quelconque des revendications 1 à 6.

11. Support de stockage non transitoire comprenant des instructions qui, lorsqu'elles sont exécutées par un ordinateur, conduisent à mettre en œuvre le procédé selon l'une quelconque des revendications 1 à 6.

12. Système comprenant une carte à microcircuit (101) et un téléphone mobile (300), adapté à mettre en œuvre le procédé selon l'une quelconque des revendications 1 à 6.
